**Europäisches Patentamt**

**European Patent Office**

**Office européen des brevets**

(11) Veröffentlichungsnummer: **0 450 580 A2**

## EUROPÄISCHE PATENTANMELDUNG

(21) Anmeldenummer: **91105211.6**

(22) Anmeldetag: **30.03.91**

(51) Int. Cl.⁵: **G02F 1/1337**

(30) Priorität: **06.04.90 DE 4011116**

(43) Veröffentlichungstag der Anmeldung:
**09.10.91 Patentblatt 91/41**

(84) Benannte Vertragsstaaten:
**DE FR GB IT NL**

(71) Anmelder: **Nokia Unterhaltungselektronik (Deutschland) GmbH**
**Östliche Karl-Friedrich-Strasse 132**
**W-7530 Pforzheim(DE)**

(72) Erfinder: **Brosig, Stefan, Dr.**
**Tecktrasse 51 B**
**W-7000 Stuttgart(DE)**

(54) **Verfahren zur Bestimmung des Anstellwinkels von Flüssigkristall-Molekülen einer Flüssigkristallzelle.**

(57) Die Erfindung betrifft Verfahren zur Bestimmung des Anstellwinkels (Pretilt-Winkels) von Flüssigkristall-Molekülen einer an der Ober- und Unterseite mit Deckplatten versehenen Flüssigkristall-Zelle (LCD). Für eine einfache und preiswerte Durchführung ist folgendes vorgesehen:

- Zusetzen eines dichroitischen Farbstoffs (17) zum Flüssigkristall (5), um die Farbstoffmoleküle (18) durch die in verdrillungsfreiem Zustand vorliegenden Flüssigkristall-Moleküle (6) auszurichten,
- Durchführung einer Extremwertermittlung bei einer Absorbtionsmessung, wobei ein die Flüssigkristall-Zelle (1) durchdringender, polarisierter Meßlichtstrahl (19) in seinem Neigungswinkel ($\alpha$) zur jeweiligen Ebene der Deckplatten (2,3) variierbar ist und
- der dem Extremwert zugeordnete Neigungswinkel ($\alpha$) zur Bestimmung des Anstellwinkels ($\delta$) herangezogen wird.

FIG.3

EP 0 450 580 A2

Die Erfindung betrifft ein Verfahren zur Bestimmung des Einstellwinkels (Pretilt-Winkels) von Flüssigkristall-Molekülen einer an der Ober- und Unterseite mit Deckplatten versehenen Flüssigkristall-Zelle (LCD).

Flüssigkristall-Zellen werden auf vielen Gebieten der Technik in zunehmenden Maße eingesetzt. Sie weisen an ihrer Ober- und an ihrer Unterseite Deckplatten auf, zwischen denen sich der Flüssigkristall befindet. Jede Deckplatte setzt sich aus unterschiedlichen Schichten zusammen, z.B. einer Polarisationsfilterschicht, einer Glasplatte, einer Elektrodenschicht sowie einer Orientierungsschicht. Letztere wird bei der Herstellung einer speziellen Behandlung unterzogen, um den Flüssigkristall-Molekülen eine Ausrichtung zu vermitteln. Die Orientierungsschicht besteht vorzugsweise aus organischen Polymeren (Polyimide, Polyphenylen); sie wird bei der Herstellung, insbesondere mit einer Walze "gerieben", um ihr die Eigenschaft einer Orientierung der Flüssigkristall-Moleküle zu verleihen. Je nach Reiberichtung lassen sich Flüssigkristall-Molekülanordnungen mit unterschiedlicher Helix-Struktur erzeugen. Unter einer Helix-Struktur ist eine Verdrillung (Twist) einer eine Reihe zwischen den Deckplatten der Flüssigkristall-Zelle bildender Flüssigkristall-Moleküle zu verstehen. Die im wesentlichen stabförmigen Flüssigkristall-Moleküle verlaufen dabei bezogen auf ihre Längserstreckung etwa parallel zu den Deckplatten-Ebenen. Von dieser Parallelität wird jedoch insofern abgewichen, als sie einen Anstellwinkel (Pretilt-Winkel) zu den Deckplatten-Ebenen aufweisen. Dieser Pretilt-Winkel ist erwünscht, weil er die Helix stabilisiert. Bei einer sogenannten TN-Zelle beträgt der Twistwinkel 90°. Eine derartige Zelle hat den Nachteil, daß die Anzeige nur innerhalb eines relativ kleinen Blickwinkelbereichs deutlich erkennbar ist. Flüssigkristall-Zellen mit Twistwinkeln von 220° und mehr werden als "Supertwisted Nematic" (STN) bezeichnet. Sie sind über einen wesentlich größeren Blickwinkelbereich ablesbar. Sogenannte EVA-Zellen (Extended Viewing Angle) sind im Hinblick auf den Blickwinkel noch weiter verbessert; sie weisen einen Twistwinkel von 270° auf.

Aus dem vorstehenden wird deutlich, daß eine Bestimmung des Anstellwinkels von Flüssigkristall-Molekülen einer Flüssigkristall-Zelle (LCD, Liquid-Cristal-Display) bei ihrer Herstellung sowie für ihren Einsatz erforderlich sein kann. Hierzu sind aus dem Stand der Technik unterschiedliche Verfahren bekannt. Bei einem bekannten Laserverfahren wird der Anstellwinkel mittels Interferenzmessung bestimmt. Ferner ist ein nach dem Frederickz-Effekt arbeitendes Verfahren bekannt, bei dem mit Hilfe eines Magnetfelds der Anstellwinkel bestimmbar ist. Beide bekannte Verfahren haben den Nachteil, daß zu ihrer Durchführung sehr aufwendige Apparaturen erforderlich sind, die hohe Kosten mit sich bringen.

Der Erfindung liegt daher die Aufgabe zugrunde, ein Verfahren zur Bestimmung des Anstellwinkels von Flüssigkristall-Molekülen einer Flüssigkristall-Zelle anzugeben, das einfach und preiswert durchführbar ist. Mithin soll eine unkomplizierte Messung des Pretilts (Anstellwinkels) möglich sein.

Diese Aufgabe wird erfindungsgemäß durch folgende Verfahrensschritte gelöst: Zusetzen eines dichroitischen Farbstoffs zum Flüssigkristall um die Farbstoff-Moleküle durch die in verdrillungsfreiem Zustand vorliegenden Flüssigkristall-Moleküle parallel zu letzteren auszurichten, Durchführung einer Extremwertermittlung bei einer Absorbtionsmessung, wobei ein die Flüssigkristall-Zelle durchdringender Meßlichtstrahl in seinem Neigungswinkel zur jeweiligen Ebene der Deckplatten variierbar ist und der dem Extremwert zugeordnete Neigungswinkel zur Bestimmung des Anstellwinkels herangezogen wird. Durch das Zusetzen des dichroitischen Farbstoffs zum Flüssigkristall wird die Flüssigkristall-Zelle durchsetzendes Licht richtungsabhängig absorbiert, da sich die Farbstoffmoleküle entsprechend der Orientierung der Flüssigkristall-Moleküle ausrichten. Die Flüssigkristall-Moleküle wiederum erhalten durch die Orientierungsschichten der Deckplatten der Flüssigkristall-Zelle ihre Vorzugsrichtung. Die Orientierungsschichten sind derart ausgerichtet, daß die Farbstoffmoleküle einen verdrillungsfreien Zustand einnehmen; es liegt daher ein Twistwinkel von 0° vor. Insofern weisen die "angelagerten" Farbstoffmoleküle ebenfalls keine Helix-Struktur auf. Die mit Farbstoff versehene Flüssigkristall-Zelle wird einer Absorbtionsmessung unterzogen, das heißt, sie wird im Strahlengang eines polarisierten Meßlichts derart schwenkbar angeordnet, daß der die Flüssigkristall-Zelle durchdringende Meßlichtstrahl in seinem Neigungswinkel relativ zur jeweiligen Ebene der Deckplatten variierbar ist. Nunmehr wird die Flüssigkristall-Zelle derart gedreht, daß sich bei der Absorbtionsmessung ein Extremwert ergibt; insbesondere bis sich maximale Absorbtion einstellt. Der dabei vorliegende Neigungswinkel bildet ein Maß zur Bestimmung des Anstellwinkels der Flüssigkristall-Moleküle, so daß unter Berücksichtigung der Grenzflächenbrechung (Luft-Deckplatte, Deckplatte-Flüssigkristall) auf einfache Weise die Bestimmung des Anstellwinkels durchgeführt werden kann. Der Polarisator zum Polarisieren des Meßlichts kann vor der Flüssigkristall-Zelle oder aber auch hinter der Flüssigkristall-Zelle senkrecht zum Meßlichtstrahl stehen, wobei die Polarisationsrichtung senkrecht zur Drehachse liegt. Aus dem vorstehenden wird deutlich, daß hierzu keine aufwendigen Geräte erforderlich sind und daß das Verfahren sehr einfach durchführbar ist.

Der verdrillungsfreie Zustand der Flüssigkristall-Moleküle wird durch antiparallel wirkende Orientierung der beiden Deckplatten, insbesondere von Orientierungsschichten der Deckplatten, hervorgerufen. Dieser Zustand läßt sich vorzugsweise dadurch erzielen, daß die Orientierungsschichten der Deckplatten zur Erzeugung ihrer Orientierung in antiparalleler Richtung gerieben werden.

Wie bereits erwähnt, kann für die Extremwertermittlung die maximale Absorbtion des mit Farbstoff versehenen Flüssigkristalls bestimmt werden. Diese liegt dann vor, wenn möglichst wenig Licht die Flüssigkristall-Zelle durchdringt. Dieser Zustand ist dann erreicht, wenn der Meßlichtstrahl senkrecht auf die durch die Flüssigkristall-Moleküle ausgerichteten Farbstoffmoleküle auftrifft. Bei der Absorbtionsmessung wird daher die Flüssigkristall-Zelle so weit gedreht, bis sich dieser Zustand einstellt.

Auf besonders einfache Weise läßt sich die Absorbtionsmessung mit einem Absorbtionsspektrometer durchführen.

Bei dem vorstehend geschilderten Verfahren können sich Ungenauigkeiten bei der Bestimmung des Anstellwinkels durch Störeinflüsse einstellen. Diese Störeinflüsse bestehen unter anderem darin, daß sich der innerhalb der Flüssigkristall-Zelle liegende Weg des Meßlichtstrahls in Abhängigkeit vom Neigungswinkel verändert, wodurch die Absorbtion beeinflußt wird. Um diese Fehlerquelle zu beseitigen, ist nach einer Weiterbildung der Erfindung vorgesehen, daß bei der Absorbtionsmessung sowohl die Flüssigkristall-Zelle als auch eine Vergleichszelle gleichzeitig untersucht werden, wobei die identisch aufgebaute Vergleichszelle eine isotrope Farbstofflösung enthält, die den gleichen Brechungsindex wie der mit Farbstoff versehene Flüssigkristall der Flüssigkristall-Zelle hat und unter dem gleichen Neigungswinkel von einem Vergleichslichtstrahl durchdrungen wird. Mithin liegen zwei Lichtstrahlengänge vor, und zwar zum einen der Meßlichtstrahlengang, in dem sich die Flüssigkristall-Zelle befindet und der Vergleichslichtstrahlengang, in dem die Vergleichszelle angeordnet ist. Da beide Zellen (Flüssigkristall-Zelle und Vergleichszelle) identisch aufgebaut sind und zu ihrem zugeordneten Lichtstrahl jeweils den gleichen Neigungswinkel aufweisen, wird sich der vorstehend beschriebene Fehler einer neigungswinkelabhängigen Lichtwegverlängerung in beiden Zellen einstellen. Ermittelt man nunmehr nur die relative Änderung der Absorbtion zwischen Flüssigkristall-Zelle und Vergleichszelle, so wird der genannte "Lichtwegfehler" eliminiert. Da durch den identischen Aufbau der beiden Zellen Reflektionen in gleicher Weise auftreten, wirken sich diese bei der Relativmessung ebenfalls nicht aus. Da die Vergleichszelle eine isotrope Farbstofflösung aufweist, also eine richtungsunabhängige gleichbleibend große Absorbtionseigenschaft besitzt, läßt sich der Extremwert ohne Fehler durch sich verändernde Parameter ermitteln, da Parameteränderungen sowohl in der Flüssigkristall-Zelle als auch in der Vergleichszelle auf gleiche Weise erfolgen und sich daher aufheben. Die Absorbtionsergebnisse der Vergleichszelle bilden daher Bezugswerte für die Extremwertermittlung.

Insbesondere ist vorgesehen, daß in der Flüssigkristall-Zelle und in der Vergleichszelle der gleiche Farbstoff verwendet wird. Sofern nur bei einer Wellenlänge gemessen wird, kann in der Vergleichszelle alternativ jedoch auch ein anderer Farbstoff eingesetzt werden.

Beim Start der Absorbtionsmessung wird vorzugsweise derart vorgegangen, daß der Meßlichtstrahl und der Vergleichslichtstrahl jeweils senkrecht auf die Deckplatten von Flüssigkristall-Zelle und Vergleichszelle fallen und die Farbstoffkonzentration in der Vergleichszelle derart eingestellt wird, daß die Absorbtionen in beiden Strahlengängen gleich groß sind. Die Einstellung der Absorbtion der Vergleichszelle kann durch Zugabe einer entsprechenden Menge des Farbstoffs vorgenommen werden.

Alternativ ist es jedoch auch möglich, eine farbstofffreie aber flüssigkristallhaltige Vergleichszelle einzusetzen. In diesem Fall muß die sich in der Flüssigkristall-Zelle 1 mit dem Drehwinkel ändernde Lenkung des Lichtes und die sich daraus ergebende Absorbtionsänderung rechnerisch berücksichtigt werden.

Da gewährleistet sein muß, daß der Neigungswinkel der jeweiligen Zelle in bezug auf seinen zugehörigen Lichtstrahl (Meßlichtstrahl bzw. Vergleichslichtstrahl) stets gleich groß ist, sind die Zellen jeweils auf einem Drehteller oder dergleichen befestigt, wobei die Drehteller zur Herbeiführung gleicher Neigungswinkel miteinander mechanisch gekoppelt sind. Im einfachsten Falle geschieht dies durch eine exzentrisch an den Drehtellern angreifende Verbindungsstange. Wird der eine Drehteller bewegt, so nimmt die Verbindungsstange den anderen Drehteller um den gleichen Drehwinkel mit.

Anhand der Figuren wird die Erfindung näher erläutert. Und zwar zeigt:

Figur 1      eine schematische Darstellung der Anordnung von Flüssigkristall-Molekülen bei nichtangesteuerter Flüssigkristall-Anzeige,

Figur 2      eine Darstellung gemäß Figur 1, jedoch bei angesteuerter Flüssigkristall-Anzeige,

Figur 3      einen Querschnitt durch einen Abschnitt einer Flüssigkristall-Zelle mit 0° Twist,

Figur 4a,b   die Flüssigkristall-Zelle sowie eine Vergleichszelle in einer zu Beginn einer Absorbtionsmessung eingenommenen Stellung,

Figur 5a,b   eine Darstellung gemäß Figur 4a,b, wobei die Zellen jedoch einen Neigungswinkel zum jeweiligen Lichtstrahl einnehmen,

Figur 6      eine schematische Darstellung des Strahlengangs durch die Flüssigkristall-Anzeige bei der

3

Absorbtionsmessung,

Figur 7    eine schematische Darstellung der Anordnung von Flüssigkristall-Zelle und Vergleichszelle bei der Absorbtionsmessung und

Figur 8    eine Drehtelleranordnung zum gleichgroßen und gleichsinnigen Verschwenken von Flüssigkristall-Zelle und Vergleichszelle im jeweiligen Strahlengang.

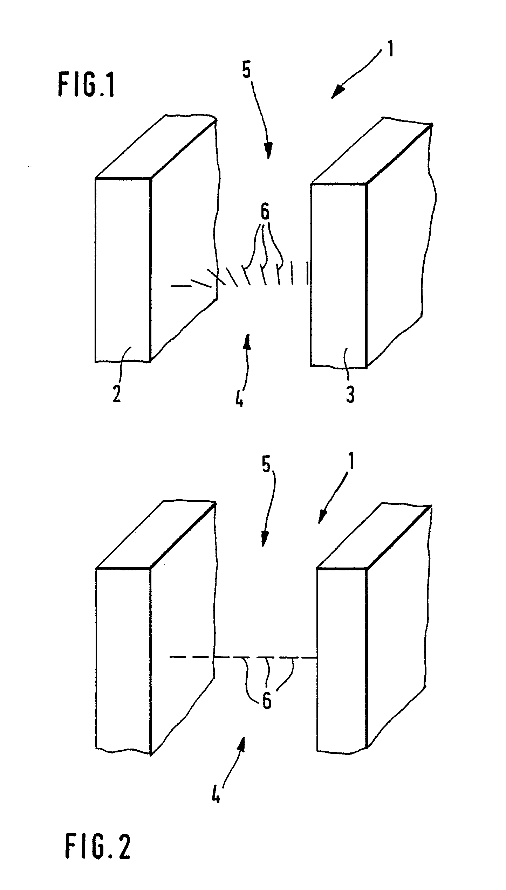

Figur 1 zeigt einen Abschnitt einer Flüssigkristall-Zelle 1 in schematischer Darstellung. Diese besitzt an ihrer Ober- und an ihrer Unterseite jeweils eine Deckplatte 2 bzw. 3. Der Raum 4 zwischen den Deckplatten 2 und 3 ist mit einem Flüssigkristall 5 ausgefüllt, von dem in der Figur 1 lediglich einige Flüssigkristall-Moleküle 6 dargestellt sind. Die Flüssigkristall-Moleküle 6 sind im wesentlichen stabförmige ausgebildet. In ihrer Längserstreckung verlaufen sie etwa parallel zu der jeweiligen Ebene der Deckplatte 2 bzw. 3.

Im nicht angesteuerten Zustand der Flüssigkristall-Zelle 1 nehmen die einzelnen Flüssigkristall-Moleküle 6 eine zueinander beabstandete, parallele Stellung ein, wobei sich eine in sich verwundene Struktur ergibt. Das heißt, jedes Flüssigkristall-Moleküle 6 ist gegenüber dem benachbarten Flüssigkristall-Moleküle 6 um einen gewissen Winkelbetrag verdreht. Die so gebildete Helix wird auch als Twist bezeichnet. Hierunter ist der sich insgesamt einstellende Verdrillungswinkel zwischen dem ersten und letzten Flüssigkristall-Moleküle 6 einer Helix-Anordnung zu verstehen.

Es gibt Flüssigkristall-Zellen 1 mit einem Twistwinkel von 90° (TN-Zelle). Da derartige Zellen jedoch nur innerhalb eines relativ kleinen Blickwinkelbereichs deutlich lesbar sind, werden größere Twistwinkel angestrebt. Zellen der Bezeichnung "Supertwisted Nematic" (STN) haben einen Twistwinkel von etwa 220° und mehr. Der Blickwinkelbereich für eine deutliche Abbildung ist erheblich größer. Bei sogenannten EVA-Zellen (Extended Viewing Angle), die einen Twistwinkel von 270° aufweisen, sind besonders gute Abbildungseigenschaften im Hinblick auf den Blickwinkel vorhanden.

Die genannte Helix-Struktur der Flüssigkristall-Moleküle hat bei TN-Zellen die Eigenschaft, daß der elektrische Feldvektor von die Flüssigkristall-Zelle durchdringendem Licht entsprechend dem Twistwinkel mitverdreht wird, wodurch aufgrund von in den Deckplatten vorgesehener Polarisationsfilter keine Anzeige erfolgt, da die Flüssigkristall-Zelle lichtundurchlässig wird (bei paralleler Orientierung der Polarisationsfolien auf der Vorderplatte und der Deckplatte).

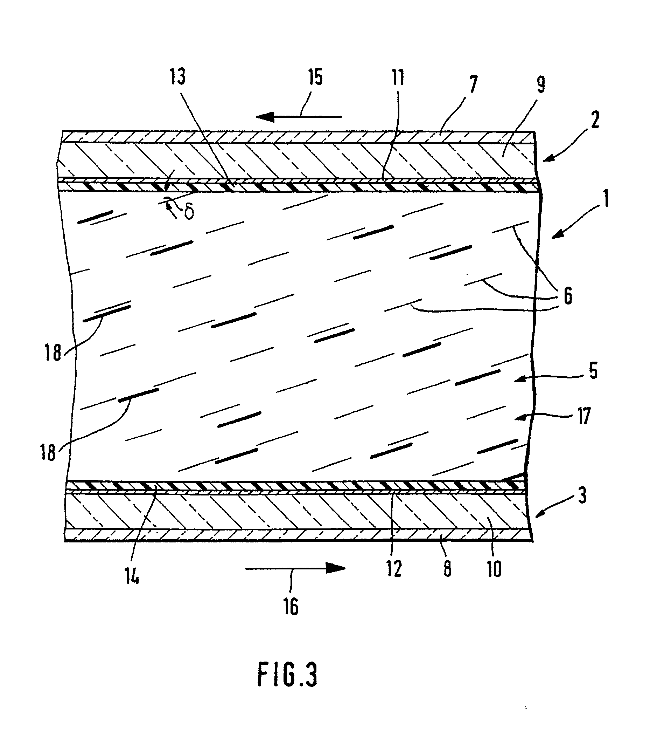

Wird die Flüssigkristall-Zelle geschaltet, das heißt, an Steuerspannung gelegt (hierauf wird im nachfolgenden noch kurz eingegangen), so richten sich die Flüssigkristall-Moleküle 6 -wie in Figur 2 wiedergegeben- aus (homöotrop), das heißt, es entfällt das Mitdrehen des elektrischen Feldvektors des Lichts. Die Folge ist, daß die Flüssigkristall-Zelle transparent wird; mithin einseitig der Anordnung vorhandenes Fremdlicht durchscheint, wodurch eine Anzeige möglich ist. Von der zuvor erwähnten, etwa parallelen Ausrichtung der Flüssigkristall-Moleküle 6 zur Ebene einer der Deckplatten 2 bzw. 3 besteht -gemäß Figur 3- insofern eine gewisse Abweichung, als das sie bezüglich ihrer Längserstreckung einen Anstellwinkel δ zu der genannten Ebene der Deckplatte 2 bzw. 3 einschließen (Figur 3). Dieser Anstellwinkel δ wird auch als Pretilt-Winkel bezeichnet. Der Anstellwinkel δ ist erwünscht, da er die Helix der Flüssigkristall-Moleküle 6 stabilisiert. Hierdurch ist es unter anderem möglich, möglichst große Twistwinkel zu realisieren, das heißt also, Flüssigkristall-Zellen (LCD) zu bauen, die über große Blickwinkelbereiche gut lesbar sind.

Die Erfindung bezieht sich auf die Bestimmung des Anstellwinkels δ von Flüssigkristall-Molekülen 6 bei Flüssigkristall-Zellen 1.

Bevor auf das Verfahren zur Bestimmung des Anstellwinkels δ näher eingegangen wird, soll zunächst -gemäß Figur 3- der konstruktive Aufbau der Flüssigkristall-Zelle 1 näher dargelegt werden. Die Deckplatten 2 und 3 bestehen aus unterschiedlichen Schichten. Jeweils außen befindet sich ein Polarisationsfilter 7 bzw. 8. Hieran grenzt eine Glasscheibe 9 bzw. 10 an, die auf ihrer Innenseite mit einer elektrisch leitfähigen Schicht 11 bzw. 12 versehen ist. Die Schichten 11,12 bestehen zumeist aus Ito (Indiumtinoxide). Sie weisen eine Struktur wie die später bei der Ansteuerung sichtbare gewünschte Anzeige auf. Ihre Schichtdicke ist derart gering, daß sie transparent sind. Sie sind elektrisch leitfähig und mit -nicht dargestelltenelektrischen Anschlüssen verbunden, denen -für die Anzeige- elektrische Steuerspannungen zugeführt werden. An die elektrisch leitfähigen Schichten 11 und 12 grenzt dann schließlich noch jeweils eine Orientierungsschicht 13 bzw. 14 an. Die Orientierungsschichten 13 bzw. 14 bestehen aus organischen Polymeren, insbesondere Polyimide oder Polyphenylen; sie verleihen den Flüssigkristall-Molekülen eine Orientierung (Helix-Struktur). Ihre Eigenschaft, den Flüssigkristall-Molekülen 6 diese Orientierung zu geben, erhalten die Orientierungsschichten 13 und 14 durch ein Reibverfahren bei der Herstellung der Flüssigkristall-Zelle 1. Zur Durchführung des erfindungsgemäßen Verfahrens ist ein verdrillungsfreier Zustand der Flüssigkristall-Moleküle 6 erforderlich (Twistwinkel = 0°). Hierzu werden die Orientierungsschichten 13 und 14 mit einer Walze in antiparalleler Richtung (Pfeile 15 und 16 in Figur 3) gerieben. Es stellt sich dann die in der Figur 3 wiedergegebene Anordnung der Flüssigkristall-Moleküle 6 ein.

Zur Bestimmung des Anstellwinkels δ (Pretilt-Winkels) der Flüssigkristall-Moleküle 6 wird dem Flüssigkristall 5 ein dichroitischer Farbstoff 17 zugesetzt. Die Farbstoffmoleküle 18, die ebenfalls etwa stabförmig ausgebildet sind, lagern sich den Flüssigkristall-Molekülen 6 des Flüssigkristalls 5 an, so daß sie auch die Vorzugsrichtung der Flüssigkristall-Moleküle 6 annehmen (Figur 3). Mithin besitzen auch die Farbstoffmoleküle 16 den gleichen Anstellwinkel $\delta$ wie die Flüssigkristall-Moleküle 6.

Erfindungsgemäß wird zur Bestimmung des Anstellwinkels $\delta$ eine Absorbtionsmessung durchgeführt (Figuren 4a,b; 5a,b; 6). Hierzu wird ein Meßlichtstrahl 19, der die Intensität $I_0$ aufweist, auf die mit dichroitischen Farbstoff 17 versetzte Flüssigkristall-Zelle 1 gerichtet (Figur 4a). Ferner wird in einem Vergleichslichtstrahl 20 der gleichen Intensität $I_0$ eine Vergleichszelle 21 angeordnet, die identisch wie die Flüssigkristall-Zelle 1 ausgebildet ist, jedoch eine isotrope Lösung des gleichen Farbstoffs 17 wie die Meßzelle 22 aufweist. Unter Meßzelle 22 ist hier die Flüssigkristall-Zelle 1 zu verstehen. Die isotrope Lösung hat die Eigenschaft, daß die Farbstoffmoleküle der Vergleichszelle 21 keine Vorzugsrichtung aufweisen.

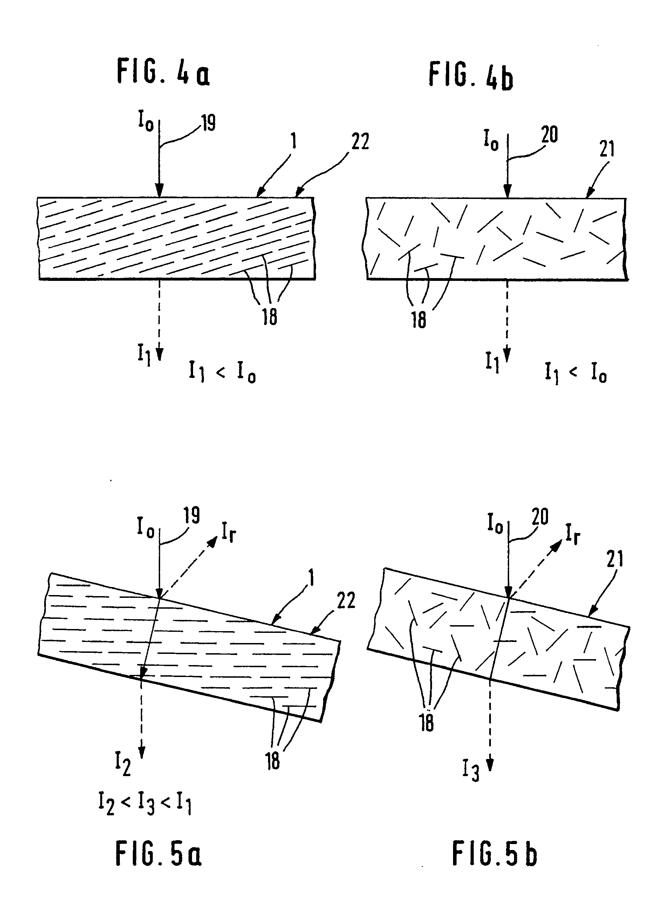

Aus den Figuren 4a,b wird deutlich, daß der Meßlichtstrahl 19 und der Vergleichslichtstrahl 20 beim Passieren der Meßzelle 22 und der Vergleichszelle 21 durch Absorbtion abgeschwächt werden (Extinktion), so daß sich eine Intensität $I_1$ einstellt. Es gilt:

$$I_1 < I_0.$$

Zu Beginn der Absorbtionsmessung werden Meßzelle 22 und Vergleichszelle 21 derart ausgerichtet, daß der Meßlichtstrahl 19 und der Vergleichslichtstrahl 20 senkrecht auf die Deckplatten 2 bzw. 3 der beiden Zellen fallen. Die Menge des der Vergleichszelle 21 zugesetzten Farbstoffs 17 wird derart eingestellt, daß die Absorbtionen beider Zellen (Vergleichszelle 21, Meßzelle 22) in dieser Stellung gleich groß sind.

Anschließend werden Meßzelle 22 und Vergleichszelle 21 um den gleichen Neigungswinkel derart verschwenkt (Figuren 5a,b), daß sich im Hinblick auf die Absorbtionsmessung ein Extremwert ermitteln läßt. Dieser besteht in der relativen maximalen Absorbtion. "Relativ" bedeutet in diesem Zusammenhang, daß die Meßergebnisse (Intensität $I_2$ der Meßzelle 22 sowie Intensität $I_3$ der Vergleichszelle 21) relativ zueinander ausgewertet werden, in dem die Intensität $I_3$ des die Vergleichszelle 21 passierten Vergleichslichtstrahls 20 als Grundlage zum Vergleich gegenüber der Intensität $I_2$ des die Meßzelle 22 durchlaufenden Meßlichtstrahls 21 herangezogen wird. Die beschriebene Drehung der beiden Zellen erfolgt nun bis in eine Stellung, in der die Absorbtion der Meßzelle 22 relativ zu der Absorbtion der Vergleichszelle 21 maximal ist. Es gilt dann:

$$I_2 < I_3 < I_1.$$

Aus den Figuren 5a,b ist ferner ersichtlich, daß an der Meßzelle 22 und der Vergleichszelle 21 Reflektionen (Intensität $I_r$) auftreten. Da aufgrund der identischen Bauform beider Zellen diese Reflektionen gleich groß sind, wirken sie sich bei der (relativen) Messung nicht aus. Gleiches gilt für die sich mit dem Neigungswinkel verändernde Lichtlaufstrecke innerhalb der Meßzelle 22 bzw. der Vergleichszelle 21. Mit größer werdendem Neigungswinkel vergrößert sich auch die Lichtlauflänge in diesen Zellen, was Auswirkungen auf die Absorbtion hat. Da jedoch beide Zellen gleiche Lichtweglängenvergrößerungen aufweisen, wird der zu ermittelnde Extremwert nicht verfälscht.

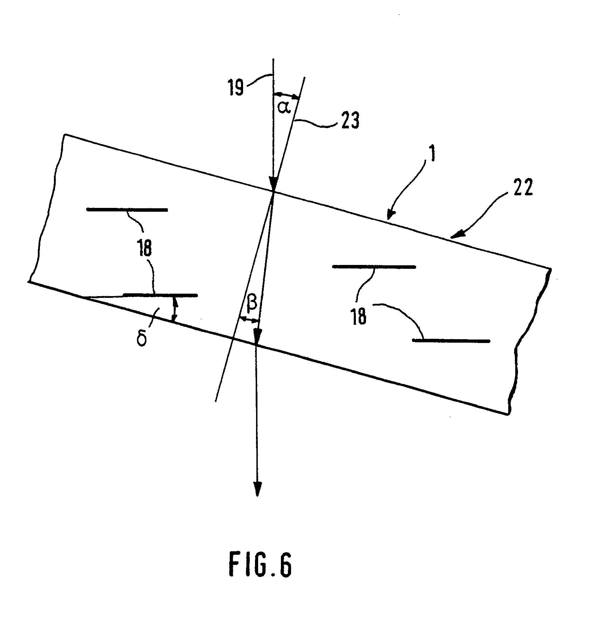

Ist der Neigungswinkel aufgefunden, dem die maximale Absorbtion der Meßzelle 22 zugeordnet ist, so kann dieser zur Bestimmung des Anstellwinkels $\delta$ herangezogen werden. Hierzu sei auf die Figur 6 verwiesen. Es ist dort ersichtlich, daß der Meßlichtstrahl 19 zum Lot 23 einen Winkel $\alpha$ einschließt. Das Lot 23 steht senkrecht auf der Ebene der Deckplatte 2 bzw. 3 der Meßzelle 22. Durch die Lichtbrechung weist der Meßlichtstrahl 19 im Innern der Meßzelle 22 bezüglich des Lots 23 den Winkel $\beta$ auf. Die Farbstoffmoleküle 18 besitzen -wie bereits erwähnt- zur Ebene der Deckplatte 2 bzw. 3 den Anstellwinkel $\delta$. Der schon häufiger genannte Neigungswinkel wird durch den Winkel $\alpha$ präsentiert.

Bei der Absorbtionsmessung läßt sich die maximale Absorbtion dann feststellen, wenn der Meßlichtstrahl 19 senkrecht auf die Farbstoffmoleküle 18 trifft. Es gilt dann:

$$\delta = \beta.$$

Unter Berücksichtigung der Brechungsgesetze läßt sich daher eine Beziehung zwischen dem Winkel $\beta$

und damit dem Anstellwinkel $\delta$ sowie dem Neigungswinkel $\alpha$ herstellen, so daß durch Messung des Neigungswinkels $\alpha$ der Anstellwinkel $\delta$ berechnet werden kann. Hierzu gilt für den Brechungsindex der Luft $n_{Luft} \approx 1$ nach Snellius:

$$\frac{\sin \alpha}{\sin \beta} = n \Rightarrow \beta = \arcsin \left( \frac{1}{n} \sin \alpha \right) ,$$

wobei n die Brechzahl des Flüssigkristalls 5 ist.

Mit zunehmenden Neigungswinkel $\alpha$ nimmt der durchlaufene Lichtweg in der Meßzelle 22 zu, was jedoch durch die Vergleichszelle 21 kompensiert wird und daher keine negativen Auswirkungen auf das Meßergebnis hat.

Alternativ ist es jedoch auch möglich, eine Vergleichszelle zu verwenden, die keinen Farbstoff enthält. In diesem Falle muß man die Lichtweglängenänderung mit zunehmendem Winkel $\beta$ berücksichtigen. Es ergibt sich dann für die absorbierte Lichtintensität:

$$I_{abs} \sim \frac{\sin^2 (90° + \delta - \beta)}{\cos \beta} .$$

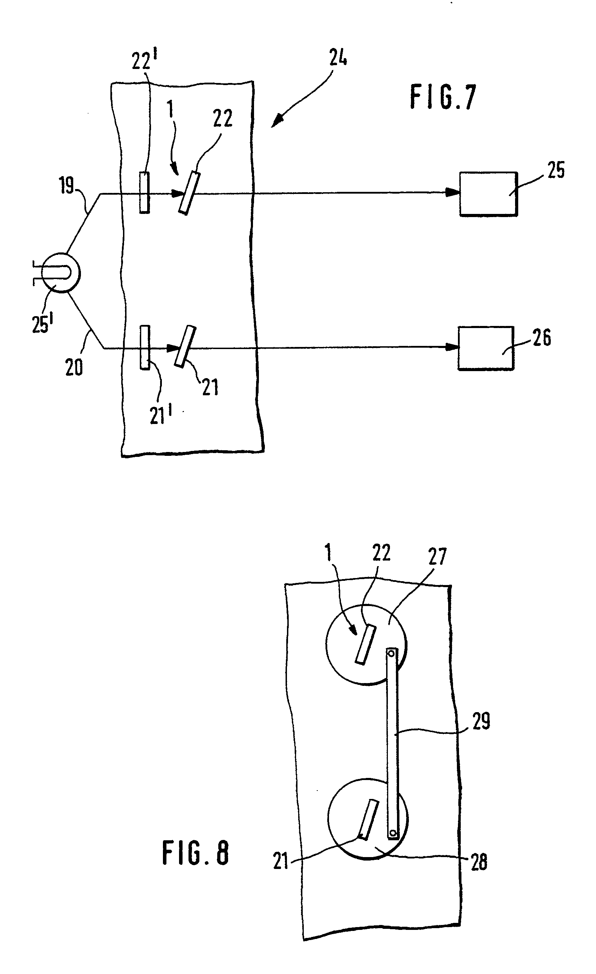

Die Figur 7 zeigt in schematischer Anordnung ein Absorbtionsspektrometer 24, mit dessen Hilfe die beschrieben Absorbtionsmessung durchgeführt werden kann. Eine Lichtquelle 25' liefert das notwendige Licht für den Meßlichtstrahl 19 sowie den Vergleichslichtstrahl 20. Beide Lichtstrahlen werden umgelenkt und durch Polarisationsfilter 21' und 22' sowie durch die Meßzelle 22 und die Vergleichszelle 21 geleitet und treffen auf Detektoren 25 und 26 auf, die die jeweilige Absorbtion ermitteln. Mit einer nicht dargestellten Auswerteschaltung läßt sich dann die maximale relative Absorbtion bestimmen.

Aus dem vorstehenden ist deutlich geworden, daß die Meßzelle 22 und die Vergleichszelle 21 stets mit dem gleichen Neigungswinkel $\alpha$ relativ zu ihren zugehörigen Lichtstrahlen gedreht werden müssen. Die Figur 8 zeigt hierzu eine Vorrichtung, die zwei Drehteller 27 und 28 aufweist, auf denen -mit entsprechenden, nicht dargestellten Halterungen- die Meßzelle 22 sowie die Vergleichszelle 21 befestigbar sind. Die beiden Drehteller 27 und 28 sind exzentrisch über eine Verbindungsstange 29 miteinander verbunden, wodurch stets gewährleistet ist, daß sich beide Drehteller 27 und 28 stets um den gleichen Winkel verdrehen. Die Polarisationsrichtung der Polarisationsfilter 21' und 22' steht senkrecht zur jeweiligen Drehachse der Drehteller 27 und 28.

Die Orientierungsrichtung der 0° Twist Zelle verläuft ebenfalls senkrecht zur zugehörigen Drehachse.

Grundsätzlich ist es nicht erforderlich, die Absorbtionsmessung als Relativmessung durchzuführen, das heißt, eine Vergleichszelle heranzuziehen. Die Erfindung läßt sich daher auch mit einer einfachen Absorbtionsmessung nur an der Meßzelle realisieren, wobei dann jedoch Fehler aufgrund der Lichtweglängenänderung bei Variation des Neigungswinkels $\alpha$ und aufgrund von Reflexionen auftreten. Diese Fehler ließen sich jedoch zum Beispiel rechnerisch kompensieren.

Insgesamt ist aufgrund des erfindungsgemäßen Verfahrens auf einfache und sehr preiswerte Weise die Bestimmung des Anstellwinkels $\delta$ (Pretilt-Winkels) von Flüssigkristall-Molekülen 6 in Flüssigkristall-Zelle (LCD) möglich.

## Patentansprüche

1. Verfahren zur Bestimmung des Anstellwinkels (Pretilt-Winkels) von Flüssigkristall-Molekülen einer an der Ober- und Unterseite mit Deckplatten versehenen Flüssigkristall-Zelle, **gekennzeichnet durch** folgende Schritte:
   - Zusetzen eines dichroitischen Farbstoffs (17) zum Flüssigkristall (5), um die Farbstoffmoleküle (18) durch die in verdrillungsfreiem Zustand vorliegenden Flüssigkristall-Moleküle (6) auszurichten,
   - Durchführung einer Extremwertermittlung bei einer Absorbtionsmessung, wobei ein die Flüssigkristall-Zelle (1) durchdringender, polarisierter Meßlichtstrahl (19) in seinem Neigungswin-

6

kel ($\alpha$) zur jeweiligen Ebene der Deckplatten (2,3) variierbar ist und

- der dem Extremwert zugeordnete Neigungswinkel ($\alpha$) zur Bestimmung des Anstellwinkels ($\delta$) herangezogen wird.

2. Verfahren nach Anspruch 1, **dadurch gekennzeichnet**, daß der verdrillungsfreie Zustand der Flüssigkristall-Moleküle (6) durch antiparallel wirkende Orientierung der beiden Deckplatten (2,3), insbesondere von Orientierungsschichten (13,14) der Deckplatten (2,3), hervorgerufen wird.

3. Verfahren nach einem der vorhergehenden Ansprüche, **dadurch gekennzeichnet**, daß die Orientierungsschichten (13,14) der Deckplatten (2,3) in antiparalleler Richtung zur Erzeugung ihrer Orientierung gerieben werden.

4. Verfahren nach einem der vorhergehenden Ansprüche, **dadurch gekennzeichnet**, daß für die Extremwertermittlung die maximale Absorbtion des mit Farbstoff (17) versehenen Flüssigkristalls (5) bestimmt wird.

5. Verfahren nach einem der vorhergehenden Ansprüche, **dadurch gekennzeichnet**, daß die Absorbtionsmessung mit einem Absorbtionsspektrometer (24) erfolgt.

6. Verfahren nach einem der vorhergehenden Ansprüche, **dadurch gekennzeichnet**, daß bei der Absorbtionsmessung sowohl die Flüssigkristall-Zelle (1) als auch eine Vergleichszelle (21) gleichzeitig untersucht werden, wobei die identisch aufgebaute Vergleichszelle (21) eine isotrope Farbstofflösung aufweist, die den gleichen Brechungsindex wie der mit Farbstoff (17) versehene Flüssigkristall (5) der Flüssigkristall-Zelle (1) hat und unter dem gleichen Neigungswinkel ($\alpha$) mit einem Vergleichslichtstrahl (20) durchstrahlt wird.

7. Verfahren nach einem der vorhergehenden Ansprüche, **dadurch gekennzeichnet**, daß in der Flüssigkristall-Zelle (1) und in der Vergleichszelle (21) der gleiche Farbstoff (17) verwendet wird.

8. Verfahren nach einem der vorhergehenden Ansprüche, **dadurch gekennzeichnet**, daß zu Beginn der Absorbtionsmessung der Meßlichtstrahl (19) und der Vergleichslichtstrahl (20) jeweils senkrecht auf die Deckplatten (2,3) von Flüssigkristall-Zelle (1) und Vergleichszelle (21) fallen und die Farbstoffkonzentration in der Vergleichszelle (21) derart eingestellt wird, daß die Absorbtionen in beiden Zellen (Flüssigkristall-Zelle 1, Vergleichszelle 21) gleich groß sind.

9. Verfahren nach einem der vorhergehenden Ansprüche, **dadurch gekennzeichnet**, daß beim Einsatz einer farbstofffreien Vergleichszelle (21) der dem Brechungswinkel ($\beta$) entsprechende Lichtwegunterschied in der Flüssigkristall-Zelle (1) rechnerisch bei der Bestimmung des Anstellwinkels ($\delta$) berücksichtigt wird.

10. Verfahren nach einem der vorhergehenden Ansprüche, **dadurch gekennzeichnet**, daß zur Variation des Neigungswinkels ($\alpha$) die Flüssigkristall-Zelle (1) und die Vergleichszelle (21) je an einem Drehteller (27,28) befestigt werden, wobei die Drehteller (27,28) zur Herbeiführung gleicher Neigungswinkel ($\alpha$) miteinander gekoppelt sind.

FIG.1

FIG.2

FIG.3

FIG. 4a

$I_2 < I_3 < I_1$

FIG. 5a

FIG. 4b

FIG. 5b

FIG.6

FIG.7

FIG. 8